# EUROPÄISCHE PATENTSCHRIFT

(11) **EP 0 908 677 B1**
(45) Veröffentlichungstag und Bekanntmachung des Hinweises auf die Patenterteilung: **18.06.2003**
(21) Anmeldenummer: 98114059.3
(22) Anmeldetag: 28.07.1998
(51) Int. Cl.: F23L 17/00, F23L 17/16

(54) **Röhrenofen**
Pipestill heater
Four tubulaire

(30) Priorität: 10.10.1997 DE 19744882
(43) Veröffentlichungstag der Anmeldung: 14.04.1999
(73) Patentinhaber: MG Technologies AG, 60325 Frankfurt am Main (DE)
(72) Erfinder: Hohmann, Friedrich, 63225 Langen (DE)
(74) Vertreter: Revesz, Veronika

(56) Entgegenhaltungen:
- FR-A- 1 182 497
- US-A- 1 604 271
- US-A- 3 988 425
- US-A- 4 604 051

## Beschreibung

Die Erfindung betrifft einen Röhrenofen mit einer Brennkammer mit einem oder mehreren Brennern und mit mehreren, in der Brennkammer angeordneten, Katalysator enthaltenden Röhren, wobei jeder Brenner eine Brennstoff-Zufuhrleitung und eine Zuleitung für Verbrennungsluft aufweist, wobei die Röhren während des Ofenbetriebs mit kohlenwasserstoffhaltigem Einsatzgemisch beaufschlagt werden und ein Wasserstoff und Kohlenoxide enthaltendes Produktgemisch abgezogen wird, und mit einem mit der Brennkammer verbundenen Abgaskanal zum Abführen von Verbrennungsgas aus der Brennkammer.

Röhrenöfen dieser Art sind seit langem bekannt und z. B. in den US-Patenten 3 988 425 und 4 442 020 beschrieben. Hierbei wird durch ein erstes Gebläse Luft zu den Brennern gefördert, und ein zweites Gebläse saugt das Verbrennungsgas aus dem Abgaskanal ab.

Der Erfindung liegt die Aufgabe zugrunde, Röhrenöfen einfach und kostengünstig auszubilden und dabei den Platzbedarf für die Gebläseeinrichtung zu verringern. Erfindungsgemäß geschieht dies beim eingangs genannten Röhrenofen dadurch, daß ein Luftgebläse mit einer ersten luftführenden Leitung mit den Zuleitungen für Verbrennungsluft verbunden ist und daß eine zweite luftführende Leitung von der ersten Leitung ausgeht und im Abgaskanal mündet, wobei die Luft aus der zweiten Leitung eine Förderwirkung auf das Verbrennungsgas ausübt.

Der erfindungsgemäße Röhrenofen kommt nur mit einem Luftgebläse aus, das sowohl die Brenner mit Verbrennungsluft versorgt und auch Verbrennungsgas aus der Brennkammer abzieht. Vorteilhafterweise ist der Abgaskanal mit einer Venturikehle versehen, in welcher die zweite luftführende Leitung mündet. Die Röhrenöfen dienen üblicherweise der Umsetzung von Kohlenwasserstoffen, z. B. Erdgas, zusammen mit Wasserdampf zu rohem Synthesegas, Geeignete Katalysatoren sind bekannt und haben z. B. Nickel als aktive Komponente. Die Temperaturen in den Röhren, die durch indirekten Wärmeaustausch erreicht werden, liegen zumeist im Bereich von 700 bis 1000°C, und die Drücke betragen etwa 1 bis 40 bar.

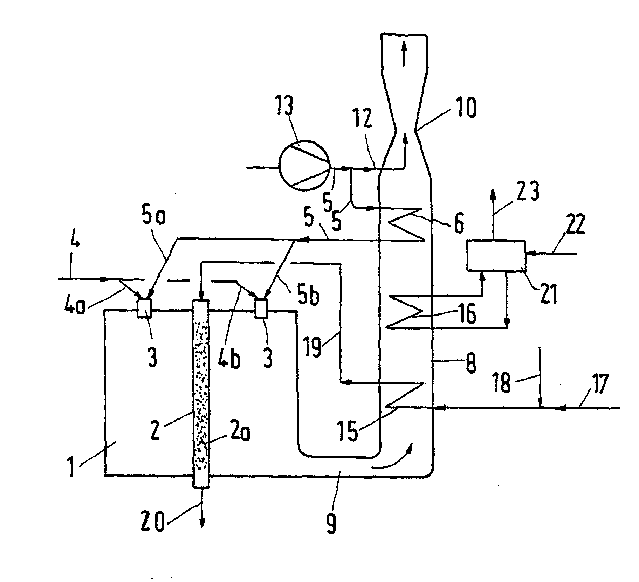

Ausgestaltungsmöglichkeiten des Röhrenofens werden mit Hilfe der Zeichnung erläutert, sie zeigt eine Röhrenofen-Anlage in schematischer Darstellung.

In einer Brennkammer (1) sind zahlreiche Röhren (2) angeordnet, von denen zur Vereinfachung in der Zeichnung nur eine Röhre dargestellt ist. Die Brennkammer (1) ist mit mehreren Brennern (3) ausgestattet. Jedem Brenner (3) wird durch eine Zufuhrleitung (4a) oder (4b) flüssiger oder gasförmiger Brennstoff, z. B. Erdgas, zugeführt, der aus der Hauptleitung (4) kommt. Ferner weist jeder Brenner (3) eine Zuleitung (5a) oder (5b) für die Verbrennungsluft auf, die aus der ersten luftführenden Leitung (5) kommt. Zum Vorwärmen wird die Luft durch einen Wärmeaustauscher (6) geführt, der sich in einem Abgaskanal (8) befindet.

Heißes Verbrennungsgas, das durch die Brenner (3) gebildet wird, wird aus der Brennkammer (1) durch den Verbindungskanal (9) abgezogen und durch den Abgaskanal (8) zunächst zu einer Venturikehle (10) und von da aus weitergefördert, z. B. zu einer Reinigungseinrichtung und/oder einem Kamin. Die Förderung des Verbrennungsgases in den Kanälen (9) und (8) erfolgt mittels Treibluft, die aus einer zweiten luftführenden Leitung (12) kommt. Diese zweite Leitung (12) zweigt von der ersten Leitung (5) ab. Die in beiden Leitungen strömende Luft wird durch ein einziges Gebläse (13) herangeführt. Die aus der Leitung (12) im Bereich der Venturikehle (10) ausströmende Luft sorgt mit ihrer Ejektorwirkung für den Saugzug im Kanal (8).

Wenn bei konstant arbeitendem Gebläse (13) durch eine unbeabsichtigte Störung die Luftmenge in der Leitung (12) ansteigt, so steigt dadurch auch der Saugzug in den Kanälen (8) und (9) an, was zu erhöhter Förderung von Verbrennungsluft durch die Brenner (3) und die erste Leitung (5) führt. Dadurch sinkt die Luftmenge in der Leitung (12) wieder ab, so daß die Anordnung der beiden Leitungen (5) und (12), die von einem Gebläse (13) gespeist werden, eine selbstregelnde Wirkung entfaltet.

Es empfiehlt sich, die fühlbare Wärme des aus der Brennkammer (1) kommenden Verbrennungsgases in weiteren Wärmeaustauschern (15) und (16) zu nutzen. Umzusetzende Kohlenwasserstoffe werden in der Leitung (17) herangeführt, mit Wasserdampf aus der Leitung (18) gemischt, im Wärmeaustauscher (15) erhitzt und durch die Leitung (19) in die Röhren (2) geleitet. Das im Katalysatorbett (2a) gebildete Produktgas, welches CO und H₂ enthält, wird durch die Produktleitung (20) abgezogen.

Zur Erzeugung von Wasserdampf wird der Wärmeaustauscher (16) genutzt, der mit einer Dampftrommel (21) verbunden ist. Kesselspeisewasser wird in der Leitung (22) herangeführt und Wasserdampf in der Leitung (23) abgezogen.

## Patentansprüche

1. Röhrenofen mit einer Brennkammer (1) mit einem oder mehreren Brennern (3) und mit mehreren, in der Brennkammer angeordneten, Katalysator enthaltenden Röhren (2), wobei jeder Brenner (3) eine Brennstoffzufuhrleitung (4a,4b) und eine Zuleitung (5a,5b) für Verbrennungsluft aufweist, wobei die Röhren (2) während des Ofenbetriebs mit kohlenwasserstoffhaltigem Einsatzgemisch beaufschlagt werden und ein Wasserstoff und Kohlenoxide enthaltendes Produktgemisch abgezogen wird, und mit einem mit der Brennkammer (1) verbundenen Abgaskanal (8) zum Abführen von Verbrennungsgas aus der Brennkammer, **dadurch gekennzeichnet, daß** ein Luftgebläse (13) mit einer ersten luftführenden Leitung (5) mit den Zuleitungen (5a,5b) für Verbrennungsluft verbunden ist und daß eine zweite luftführende Leitung (12) von der ersten Leitung (5) ausgeht und im Abgaskanal (8) mündet, wobei die Luft aus der zweiten Leitung (12) eine Förderwirkung auf das Verbrennungsgas ausübt.

2. Röhrenofen nach Anspruch 1, **dadurch gekennzeichnet, daß** der Abgaskanal (1) eine Venturikehle (10) aufweist, in welcher die zweite luftführende Leitung (12) mündet.

3. Röhrenofen nach Anspruch 1 oder 2, **dadurch gekennzeichnet, daß** der Abgaskanal (8) mindestens einen Wärmeaustauscher (15,16) aufweist.

## Claims

1. A tubular furnace comprising a combustion chamber (1) with one or more burners (3) and with a plurality of catalyst-containing tubes (2) disposed in the combustion chamber, wherein each burner (3) has a fuel supply line (4a, 4b) and a feed line (5a, 5b) for combustion air, wherein hydrocarbonaceous feed mixture is applied to the tubes (2) during operation of the furnace and a product mixture containing hydrogen and carbon oxides is withdrawn, and and comprising an exhaust gas duct (8) connected with the combustion chamber (1) for discharging combustion gas from the combustion chamber, **characterized in that** an air blower (13) with a first air-bearing line (5) is connected with the feed lines (5a, 5b) for combustion air, and that a second air-bearing line (12) extends from the first line (5) and opens into the exhaust gas duct (8), the air from the second line (12) having a conveying effect on the combustion gas.

2. The tubular furnace as claimed in claim 1, **characterized in that** the exhaust gas duct (8) has a Venturi throat (10) into which opens the second air-bearing line (12).

3. The tubular furnace as claimed in claim 1 or 2, **characterized in that** the exhaust gas duct (8) has at least one heat exchanger (15, 16).

## Revendications

1. Four tubulaire comprenant une chambre (1) de combustion ayant un brûleur (3) ou plusieurs brûleurs (3) et ayant plusieurs tubes (2) disposés dans la chambre de combustion et contenant des catalyseurs, chaque brûleur (3) ayant un conduit (4a, 4b) d'apport de combustible et un conduit (5a, 5b) d'entrée d'air de combustion, les tubes (2) étant alimentés pendant le fonctionnement du four en un mélange de charge contenant des hydrocarbures et un mélange de produit contenant de l'hydrogène et des oxydes de carbone étant retiré, et comprenant un canal (8) pour les gaz perdus qui communiquent avec la chambre (1) de combustion et qui est destiné à évacuer des gaz de combustion de la chambre de combustion,
**caractérisé en ce qu'**une soufflante (13) d'air communique par un premier conduit (5) de passage de l'air avec les conduits (5a, 5b) d'entrée d'air de combustion et **en ce qu'**un deuxième conduit (12) de passage d'air part du premier conduit (5) et débouche dans un canal (8) pour les gaz perdus, l'air provenant du deuxième conduit (12) exerçant un effet de transport sur les gaz de combustion.

2. Four tubulaire suivant la revendication 1,
**caractérisé en ce que** le canal (1) pour les gaz perdus a un étranglement (10) formant venturi dans lequel débouche le deuxième conduit (12) de passage de l'air.

3. Four tubulaire suivant la revendication 1 ou 2,
**caractérisé en ce que** le canal (8) pour les gaz perdus a au moins un échangeur de chaleur (15, 16).
